# EUROPÄISCHE PATENTSCHRIFT

(11) **EP 2 212 660 B1**
(45) Veröffentlichungstag und Bekanntmachung des Hinweises auf die Patenterteilung: **28.06.2017**
(21) Anmeldenummer: 08799957.9
(22) Anmeldetag: 13.10.2008
(51) Int. Cl.: G01G 19/02, G01G 3/12

(54) **VORRICHTUNG ZUR BESTIMMUNG VON RAD- UND/ODER ACHSLASTEN UND/ODER GESAMTGEWICHTEN VON FAHRENDEN STRASSENFAHRZEUGEN**
DEVICE FOR DETERMINING WHEEL AND/OR AXLE LOADS AND/OR OVERALL WEIGHTS OF DRIVING ROAD VEHICLES
DISPOSITIF POUR DÉTERMINER DES CHARGES PAR ROUE ET/OU PAR ESSIEU ET/OU DES POIDS TOTAUX ADMISSIBLES POUR DES VÉHICULES ROUTIERS EN DÉPLACEMENT

(30) Priorität: 17.10.2007 AT 16712007
(43) Veröffentlichungstag der Anmeldung: 04.08.2010
(73) Patentinhaber: Batsch Waagen & EDV GmbH & Co KG, 3082 Loosdorf (AT); Hottinger Baldwin Messtechnik GmbH, 1230 Wien (AT); ÖBB-Infrastruktur Aktiengesellschaft, 1120 Wien (AT)
(72) Erfinder: BATSCH, Hans, Heinz, A-3082 Loosdorf (AT); PRESLE, Gerard, A-3400 Klosterneuburg/Weidling (AT); WEILINGER, Walter, A-1060 Wien (AT)
(74) Vertreter: Puchberger & Partner Patentanwälte
(86) Internationale Anmeldenummer: PCT/AT2008/000371
(87) Internationale Veröffentlichungsnummer: WO 2009/049341

(56) Entgegenhaltungen:
- EP-A- 0 654 654
- DE-A1- 2 043 484
- DE-U1- 9 419 908
- FR-A- 1 541 667
- FR-A- 2 567 550
- FR-A- 2 615 988

## Beschreibung

Die Erfindung bezieht sich auf eine Vorrichtung zur Bestimmung von Rad- und/oder Achslasten und/oder Gesamtgewichten von auf Straßen mit Straßenbelag fahrenden Straßenfahrzeugen mit einer Messstrecke mit mehreren Messfeldern, jeweils mit zumindest einem Kraftdetektor.

Die statische Bestimmung der Gewichte von Straßenfahrzeugen kann besonders einfach und genau erfolgen. Es besteht die Möglichkeit, entweder eine stationäre Messstelle, sogenannte Brückenwagen oder auch ortveränderliche Wägestellen, vorzusehen. In beiden Fällen liegt eine erhebliche Beeinträchtigung des fließenden Straßenverkehrs vor.

Da es beabsichtigt ist, die Kosten der Straßenbelastung entsprechend der potentiellen Beschädigung aufzuteilen, ist es erforderlich, die Radlasten, Achslasten aber auch Gesamtgewichte von Verkehrsmitteln zu bestimmen, wobei aufgrund der in den meisten Ländern bestehenden Geschwindigkeitsbegrenzungen, und zwar sowohl für Lastkraftwagen als auch Personenkraftwagen, in der Regel keine zusätzliche Bestimmung der Geschwindigkeit erforderlich ist.

Um den Verkehrsfluss nicht zu behindern, sind sogenannte dynamische Gewichtsbestimmungen, also von fahrenden Kraftfahrzeugen, die nicht nur gelegentlich durch Ableitung des Verkehrs, sondern sukzessive bei einem gesamten Verkehrsstrom erfolgen kann, erforderlich.

Eine einfache Umrechnung von dynamisch gemessenen Gewichtswerten auf statische Gewichte kann nicht durchgeführt werden, da Straßenfahrzeuge komplexen Schwingungen unterliegen. Diese Schwingungen sind u. a. von Federn, mit welchen die Achsen abgefedert sind, den Stoßdämpfern, der Bereifung und der Geschwindigkeit des Fahrzeuges abhängig. Damit muss zur dynamischen Bestimmung von Rad- und/oder Achslast oder des Gesamtgewichtes eine Messstrecke vorgesehen sein, die mehrere Messfelder jeweils mit zumindest einem Kraftdetektor aufweist. Die Kraftdetektoren können beispielsweise Piezoelemente, Dehnmessstreifen, kapazitive Wägplatten, Biegebalken u. dgl. sein. Die Kraftdetektoren müssen einerseits gegen mechanische Zerstörung geschützt werden und andrerseits muss sichergestellt sein, dass die einwirkenden Kräfte auf die Detektoren weitergeleitet werden können. Zum Schutz werden die Detektoren gemäß Stand der Technik von einem allseitig geschlossenen Hohlkörper umgeben. Einerseits muss dieser Hohlkörper stabil genug ausgebildet sein, um einen Schutz für die Kraftdetektoren darzustellen und andrerseits muss der Hohlkörper deformierbar sein, um die einwirkenden Kräfte auf die Detektoren weitergeben zu können. Derartige geschlossene Hohlkörper ermöglichen lediglich eine Umsetzung der dynamischen Messungen in statische Werte von ca. 10 % Genauigkeit.

Der vorliegenden Erfindung ist zur Aufgabe gestellt, eine Vorrichtung zu schaffen, die einerseits einen stabilen Schutz der Detektoren ermöglicht, und andrerseits eine erhöhte Genauigkeit bei den Messungen ermöglicht, und dies bei höheren Geschwindigkeiten, und zwar bis zumindest 110 km/h.

Die vorliegende Erfindung geht von einem Stand der Technik, wie er durch die EP 0 491 655 B1 gegeben ist. In dieser Patentschrift ist ein Kraftsensorsystem beschrieben, däss zur dynamischen Achslast- und Gesamtgewichtbestimmung von Fahrzeugen geeignet sein soll. Die Kraftsensoren sind in einem Rohr angeordnet, welches in im Straßenbelag eingefrästen Nuten od. dgl. angeordnet ist. In Fahrtrichtung gesehen sind zwei derartige Sensoren angeordnet. Das Rohr kann aus Metall aufgebaut sein. Zur Verarbeitung der gemessenen Daten wird in einer Datenverarbeitungsanlage, in welcher über ein Programm der komplexen Umrechnung von dynamischen Messwerten zu statischen Messwerten Rechnung getragen ist.

Aus dem Stand der Technik sind weitere gattungsgemäße Vorrichtungen zur Bestimmung von Rad und/oder Achslasten von Straßenfahrzeugen bekannt. So zeigt die EP 0 654 654 A eine derartige Vorrichtung mit mehreren Messfeldern mit jeweils zumindest einem Kraftdetektor, der in einem Hohlkörper angeordnet ist, wobei der Hohlkörper durch zwei entlang ihrer Längskanten gegeneinander federnd verbundene Schenkel gebildet ist, mit welchem die Kraftdetektoren verbunden sind. Der gezeigte Hohlkörper ist jedoch kompliziert aufgebaut. Die DE 20 43 484 A1 zeigt eine Messvorrichtung, bei der die Messaufnehmer in einem kastenförmigen Hohlkörper rundum abgeschlossen angeordnet sind. Die FR 2 567 550 A zeigt eine Wiegezelle, bei der Messaufnehmer zur Gänze in Kunstharz eingebettet sind. Die FR 1 541 667 A zeigt eine kompliziert aufgebaute Wiegezelle, bei der die Messaufnehmer in der Rahmenstruktur der kraftaufnehmenden Schenkel angeordnet sind. Die FR 2 615 988 A zeigt eine Wiegezelle mit Detektoren, die als elektromagnetische Näherungssensoren ausgebildet sind, welche nicht mit dem kraftaufnehmenden Schenkel verbunden sind. Schließlich zeigt die DE 94 19 908 U1 eine Wiegezelle, bei der der Detektor auf die Außenfläche eines Profils aufgeklebt wird. Alle bekannten Vorrichtungen sind entweder nicht zur genauen Krafterfassung geeignet, kompliziert aufgebaut, oder nicht ausreichend gegen Verschmutzung geschützt.

Diese Probleme werden erfindungsgemäß mit einer Vorrichtung gemäß Patentanspruch 1 gelöst. Es ist erfindungsgemäß vorgesehen, dass der Hohlkörper durch zwei entlang ihrer Längskanten gegeneinander federnd verbundene Schenkel gebildet ist, mit welchen der bzw. die Kraftdetektoren verbunden sind, wobei die Schenkel entweder über einen Steg kraftschlüssig verbunden sind, oder die Schenkel an einem Ende verbunden sind und einen winkelförmigen Hohlkörper bilden.

Die Stromversorgung kann über Solarzellen mit einer Speicherbatterie erfolgen.

Zur komplexen Umrechnung der dynamisch bestimmten Gewichte ist es erforderlich, dass mehrere Messungen mit Kraftdetektoren vorliegen, wobei die Messergebnisse in einer Datenverarbeitungsanlage zur Verarbeitung und Bestimmung des statischen Gesamtgewichtes herangezogen werden.

Um Räder, Achsen oder Fahrzeuge zu erfassen, sind vor und nach der Messstrecke Detektoren vorgesehen, sodass eine eindeutige Zuordnung vorgenommen werden kann. Das Messen der dynamischen Gewichte von Rädern ist insofern von Bedeutung, als durch eine asymmetrische Beladung des Fahrzeuges, bezogen auf die Fortbewegungsrichtung eine ungleichmäßige Abnützung der Straße bedingt. In vielen Fällen wird die Belastung von den Rädern, die sich auf einer Achse befinden, ausreichend sein oder auch nur das Gesamtgewicht des Fahrzeuges.

Der Schutz von Kraftdetektoren ist außerordentlich schwierig. Auf der einen Seite soll eine mechanische Zerstörung verhindert werden und auf der anderen Seite müssen die Kräfte, die auf dieselben einwirken, gemessen werden. Bislang war immer das Bestreben, den mechanischen Schutz der Detektoren möglichst groß zu halten, damit die Zerstörung derselben möglichst verhindert werden kann. Auf der anderen Seite dadurch, da der Widerstand bei sehr hoher Kraftbeaufschlagung gegen eine Deformation sehr groß ist, die Empfindlichkeit der Weiterleitung der Kräfte erheblich vermindert.

Durch die erfindungsgemäße Ausbildung des Hohlkörpers, in welchem die Detektoren angeordnet sind, und zwar, dass dieselben in einem U- förmigen Hohlkörper vorgesehen sind, welcher eine durchgehende Fuge aufweist, konnte einerseits die zerstörungsfreie Anordnung der Detektoren verwirklicht werden und andrerseits durch die gegeneinander als Biegegelenk federnden Schenkel eine Weiterleitung der Kräfte überraschend einfach verwirklicht werden.

Sind die Schenkel mit Leichtmetall aufgebaut, so kann bei entsprechender Legierungswahl, beispielsweise Duraluminium, eine mechanisch sehr stabile Einkleidung der Detektoren erreicht werden, wobei weiters eine Handhabung der Detektoren mit dem schützenden Hohlkörper einfach ermöglicht ist.

Ist der Hohlkörper mit einem faserverstärkten Kunststoff aufgebaut, so liegt auch bei mehrfacher Überlastung ein besonders guter Schutz vor, da faserverstärkte Kunststoffe nicht unmittelbar bei Belastungen oder unmittelbar danach zerbrechen, sondern es tritt ein langsames Desintegrieren ein, das heißt, die Fasern des Kunststoffes verlassen in gemäßigten Zeitabständen den Hohlkörper.

Sind die Schenkel miteinander materialbündig ausgebildet, so ist eine besonders stabile Konstruktion gegeben, die gleichzeitig auch einfach gefertigt werden kann.

Sind die Schenkel über einen Steg kraftschlüssig miteinander verbunden, so kann eine besonders beliebige Ausführungsform des Hohlkörpers zum Schutz der Detektoren ausgewählt werden.

Sind die Schenkel mit dem Steg materialbündig, insbesondere einstückig, ausgebildet, so kann der Hohlkörper besonders einfach ausgebildet werden, wobei auch einer Zerstörung bei übermäßigen Belastungen besonders einfach entgegengewirkt wird.

Trägt der obere Schenkel einen Straßenbelag, so kann auch bei schlechten Wetterbedingungen ein störungsfreier Verkehr gewährleistet sein.

Schließt der obere Schenkel mit dem Straßenbelag bündig ab, so kann ein besonders leichter Austausch der Kraftdetektoren gemeinsam mit dem Hohlkörper erfolgen, da es nicht erforderlich ist, einen Straßenbelag abzubauen.

Sind die Messfelder in zumindest zwei unterschiedlichen Abständen in Fahrtrichtung gesehen voneinander, insbesondere alternierend, angeordnet, so kann eine besonders genaue Messung aufgrund der unterschiedlichen Abstände erreicht werden.

Weist jede Messstrecke zumindest zwei in Fahrtrichtung angeordnete Reihen von Messfeldern auf, so kann auf besonders einfache Art und Weise die Radlast der unterschiedlichen Räder erfasst werden.

Sind in einer Trägerplatte zumindest eine Reihe, insbesondere zwei Reihen, von Messfeldern angeordnet, so kann bei Bedarf ein sehr einfacher und schneller Einbau in einen Verkehrsweg erfolgen.

Sind die Kraftdetektoren eines Messfeldes der einzelnen Reihen elektrisch in Serie geschaltet, so kann besonders einfach die Radlast bestimmt werden, und es müssen nicht entsprechende Rechenvorgänge in der Datenverarbeitungsanlage durchgeführt werden.

Sind die Kraftdetektoren von benachbarten Messfeldern, die in unterschiedlichen Reihen liegen, elektrisch in Serie geschaltet, so kann besonders einfach eine Achslast bestimmt werden, und es müssen nicht entsprechende Rechenvorgänge in der Datenverarbeitungsanlage durchgeführt werden.

Schließt der obere Schenkel mit einer Oberfläche der Trägerplatte bündig ab, so kann vermieden werden, dass zusätzliche Störungen durch einen Niveauunterschied und damit schwingungsmäßig Beaufschlagungen eines Messfeldes auftreten.

Sind die Trägerplatte und die oberen Schenkel der Messfelder von einer weichgummielastischen Schicht, die mit dem Straßenbelag bündig abschließt, abgedeckt, so kann die störende kraftmäßige Beaufschlagung noch verringert werden.

Ist zumindest ein, sind insbesondere alle, Kraftaufnehmer Dehnmessstreifen, so ist ein besonders sicheres System gegeben, da andere Kraftaufnehmer, wie beispielsweise piezoelektrisch, leicht gestört werden können.

Für den Einsatz der erfindungsgemäßen Vorrichtung ist es von besonderer Bedeutung, dass ein Fahrzeugerkennungssystem mit der Datenverarbeitungsanlage verbunden ist, da dann entsprechende Mitteilungen an den Fahrzeughalter erfolgen können.

Ist/sind ein Maut- und/oder Zählsystem mit der Datenverarbeitungsanlage verbunden, so kann auch eine entsprechende datenverarbeitungsmäßige Verständigung der Straßenbenützer erfolgen.

Im Folgenden wird die Erfindung anhand der Zeichnungen näher erläutert.

Es zeigen:
- Fig. 1: eine Messstrecke in schematischer Ansicht von oben,
- Fig. 2: ein Messfeld in schematischer Darstellung von oben gesehen,
- Fig. 3: ein Messfeld in Seitenansicht,
- Fig. 4: eine winkelförmige Ausführung eines Messfeldes in Seitenansicht
- Fig. 5 und Fig. 6: ein eingebautes Messfeld in einem Straßenbelag, oder Trägerplatte.

In der Messstrecke 1 mit einer Länge von 15 m und einer Breite von 3,7 m sind zwei Reihen 2 und 3 von Messfeldern 4 mit einer Länge von 1,5 m und einer Breite von 0,75 m angeordnet. Die Messfelder innerhalb einer Reihe weisen unterschiedliche Abstände d₁ und d₂ zueinander auf. Die Anordnung ist so, dass die Abstände d₁ 400 mm und d₂ 700 mm alternierend auftreten. Die Messfelder der Reihen 2 und 3 können jeweils mit dem benachbarten Messfeld elektrisch in Reihe geschalten sein. Durch diese Vorgangsweise kann ein Achsgewicht ohne Verknüpfung in einer Datenverarbeitungsanlage bestimmt werden oder, wenn keine Reihenschaltung vorliegt, eben nur die Belastung durch ein Rad. Mit der Messung der Belastung durch ein Rad kann festgestellt werden, ob das Straßenfahrzeug ungleich beladen ist. Am Beginn und am Ende der Messstrecke, bezogen auf die Fahrtrichtung des Fahrzeuges, sind Raddetektoren 5 angeordnet, die gleichzeitig als Achsendetektoren oder als Detektoren für die Fahrzeuge angeordnet sein können. Außerhalb der Messstrecke 1 ist eine Videokamera 6 angeordnet, welche zur Erkennung der Fahrzeuge dient. Die Videokamera 6 ist über ein Maut- und/oder Zahlsystem 6a mit der Datenverarbeitungsanlage 7 verbunden, die ihrerseits mit jedem einzelnen Messfeld elektrisch leitend verbunden ist, wobei ein Messverstärker 8 vorgesehen ist, der über einen Multiplexer 9 die Messfelder alternierend mit dem Messverstärker verbindet. Aus Übersichtsgründen wurden lediglich vier Verbindungen der Messfelder mit dem Multiplexer 9 dargestellt. Die ermittelten Daten können sodann entweder aufgezeichnet oder insbesondere über Funk übermittelt werden.

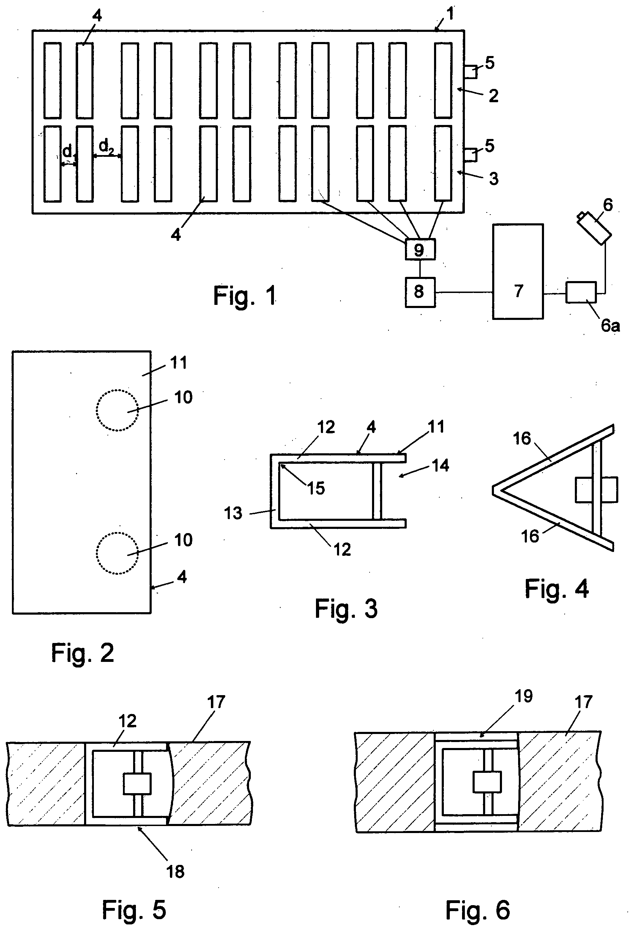

In Fig. 2 ist ein Messfeld in Sicht von oben und in Fig. 3 in Seitenansicht dargestellt, wobei strichliert Kraftdetektoren 10 dargestellt sind. Als Kraftdetektoren werden Dehnmessstreifen, Piezoelemente, kapazitive Wägplatten, Biegebalken und Ähnliches eingesetzt. Bevorzugt ist, dass in der gesamten Messstrecke eine Art von Kraftdetektoren vorgesehen ist. Das Messfeld weist einen Hohlkörper 11 auf, in welchem die Kraftdetektoren 10 derart angeordnet sind, dass sie jeweils mit dem Schenkel 12, der eine Länge von 1,5 m und eine Breite von 0,75 m aufweist, verbunden sind. Die beiden Schenkel 12 sind über einen Steg 13 mit einer Höhe von 200 mm materialbündig verbunden. Der im Querschnitt U-förmige Hohlkörper ist einstückig ausgebildet. Durch die Fuge 14 kann der Bereich der Verbindung zwischen oberem Schenkel 12 und dem Steg 13 als Biegegelenkt 15 dienen. Die beiden Kraftdetektoren 10 eines Messfeldes können ebenfalls in Serie geschaltet werden, so dass diese Messergebnisse gemeinsam weitergeleitet werden können.

In Fig. 4 ist ein Hohlkörper mit zwei Schenkeln 16 dargestellt, die an einem Ende verbunden sind. Es wird dadurch ein winkelförmiger Hohlkörper gebildet.

Als Material für den Hohlkörper kann beispielsweise Edelstahl, korrosionsfeste Kohlenstoffstähle, Leichtmetalllegierungen, insbesondere Duraluminium aber auch Kunststoffe, wie glasfaserverstärkte Polyester, zum Einsatz gelangen.

Die Messfelder können in eigene Trägerplatten, z. B. eingegossen in einer Kunststoffmasse, Beton, angeordnet werden, wie auch in Fig. 1 dargestellt, oder es kann das Messfeld direkt in eine in den Straßenbelag 17 eingefräste Nut 18 angeordnet werden. Der obere Schenkel 12 kann, wie in Fig. 5 dargestellt, mit der oberen Fläche des Straßenbelages 17 bündig abschließen. Es besteht allerdings auch die Möglichkeit, wie in Fig. 6 dargestellt, dass der obere Schenkel 12 eine Beschichtung 19, die ident zum Straßenbelag 17 sein kann oder aus weichelastischem Gummi, deren Härte in etwa einem pneumatischen Reifen entspricht, trägt. Ist ein derartiger Gummibelag vorgesehen, dann muss derselbe eine Profilierung aufweisen, um ein unbeabsichtigtes Rutschen oder Gleiten, insbesondere bei Niederschlägen, zu vermeiden.

## Patentansprüche

1. Vorrichtung zur Bestimmung von Rad- und/oder Achslasten und/oder Gesamtgewichten von auf Straßen mit Straßenbelag (17) fahrenden Straßenfahrzeugen mit einer Messstrecke (1) aus mehreren Messfeldern (4), von welchen jedes mit zumindest einem Kraftdetektor (10), welcher in einem Hohlkörper (11) als mechanischer Schutz angeordnet ist, versehen ist, wobei die Kraftdetektoren (10) mit einer Datenverarbeitungsanlage (7) verbunden sind, und gegebenenfalls weiters Detektoren (5) für Räder und/oder Achsen und/oder Fahrzeuge im Bereich vor und nach der Messstrecke (1) vorgesehen sind, wobei der Hohlkörper (11) durch zwei entlang ihrer Längskanten gegeneinander federnd verbundene Schenkel (12, 16) gebildet ist, mit welchen der bzw. die Kraftdetektoren (10) verbunden sind, **dadurch gekennzeichnet, dass** die Schenkel (12) entweder über einen einzelnen längsseitigen Steg (13) kraftschlüssig verbunden sind, oder die Schenkel (16) an einem Ende verbunden sind und einen winkelförmigen Hohlkörper (11) bilden.

2. Vorrichtung nach Anspruch 1, **dadurch gekennzeichnet, dass** die Schenkel (12, 16) aus Leichtmetall aufgebaut sind.

3. Vorrichtung nach Anspruch 1, **dadurch gekennzeichnet, dass** der Hohlkörper (11) aus einem faserverstärkten Kunststoff aufgebaut ist.

4. Vorrichtung nach Anspruch 1, 2 oder 3, **dadurch gekennzeichnet, dass** die Schenkel (12, 16) miteinander materialbündig, insbesondere einstückig, ausgebildet sind.

5. Vorrichtung nach einem der Ansprüche 1 bis 4, **dadurch gekennzeichnet, dass** die Schenkel (12) mit dem Steg (13) materialbündig, insbesondere einstückig, ausgebildet sind.

6. Vorrichtung nach einem der Ansprüche 1 bis 5, **dadurch gekennzeichnet, dass** der obere Schenkel (12) einen Straßenbelag (19) trägt.

7. Vorrichtung nach einem der Ansprüche 1 bis 5, **dadurch gekennzeichnet, dass** der obere Schenkel (12) mit dem Straßenbelag (17) bündig abschließt.

8. Vorrichtung nach einem der Ansprüche 1 bis 7, **dadurch gekennzeichnet, dass** die durch die mit den Kraftdetektoren (10) versehenen Hohlprofilen (11) gebildeten Messfelder (4) zur Bildung der Messstrecke in zumindest zwei unterschiedlichen Abständen (d₁, d₂) in Fahrtrichtung gesehen voneinander, insbesondere alternierend, angeordnet sind.

9. Vorrichtung nach einem der Ansprüche 1 bis 8, **dadurch gekennzeichnet, dass** jede Messstrecke (1) zumindest zwei in Fahrtrichtung angeordnete Reihen (2, 3) von Messfeldern (4) aufweist, wobei vorzugsweise die Kraftdetektoren (11) von benachbarten Messfeldern (4), die in unterschiedlichen Reihen (2, 3) liegen, elektrisch in Serie geschaltet sind.

10. Vorrichtung nach einem der Ansprüche 1 bis 9, **dadurch gekennzeichnet, dass** zumindest eine Reihe (2, 3), insbesondere zwei Reihen, von Messfeldern (4) in einer Trägerplatte angeordnet sind.

11. Vorrichtung nach einem der Ansprüche 1 bis 10, **dadurch gekennzeichnet, dass** der obere Schenkel (12) mit einer Oberfläche der Trägerplatte bündig abschließt.

12. Vorrichtung nach einem der Ansprüche 1 bis 11, **dadurch gekennzeichnet, dass** die Trägerplatte und die oberen Schenkel (12) der Messfelder von einer weichgummielastischen Schicht (19), die mit dem Straßenbelag bündig abschließt, abgedeckt sind.

13. Vorrichtung nach einem der Ansprüche 1 bis 12, **dadurch gekennzeichnet, dass** zumindest ein, insbesondere alle, Kraftaufnehmer (10) Dehnmessstreifen ist/sind.

14. Vorrichtung nach einem der Ansprüche 1 bis 13, **dadurch gekennzeichnet, dass** ein Fahrzeugerkennungssystem (6) und/oder ein Maut- und/oder Zählsystem (6a) mit der Datenverarbeitungsanlage (7) verbunden ist.

## Claims

1. A device for determining wheel and/or axle loads and/or total weights of road vehicles travelling on roads with a road surfacing (17) with a measuring section (1) consisting of several measuring fields (4), each of which is provided with at least one force detector (10) arranged in a hollow element (11) as mechanical protection, wherein the force detectors (10) are connected to a data processing system (7), and possibly also detectors (5) for wheels and/or axles and/or vehicles are provided in the areas in front of and behind the measuring section (1), wherein the hollow element (11) is formed by two shanks (12, 16), connected to each other in a sprung manner along their longitudinal edges, to which the force detector(s) (10) is/are connected, **characterised in that** the shanks (12) are either non-positively connected via a single longitudinal side crosspiece (13), or the shanks (16) are connected at one end and form an angular hollow element (11) .

2. The device according to claim 1, **characterised in that** the shanks (12, 16) are made of lightweight metal.

3. The device according to claim 1, **characterised in that** the hollow element (11) is made of a fibre-reinforced plastic.

4. The device according to claim 1, 2 or 3, **characterised in that** the shanks (12, 16) are designed materially bonded to each other, more particularly in one piece.

5. The device according to any one of claims 1 to 4, **characterised in that** the shanks (12) are materially bonded with the crosspiece (13), more particularly in one piece.

6. The device according to any one of claims 1 to 5, **characterised in that** the upper shank (12) bears a road surfacing (19).

7. The device according to any one of claims 1 to 5, **characterised in that** the upper shank (12) terminates flush with the road surfacing (17).

8. The device according to any one of claims 1 to 7, **characterised in that** in order to form the measuring section the measuring fields (4) formed by the hollow profiles (11) provided with the force detectors (10) are arranged at two different distances (d₁, d₂) from each other, more particularly alternating, seen in the direction of travel.

9. The device according to any one of claims 1 to 8, **characterised in that** each measuring section (1) has at least two rows (2, 3) of measuring fields (4) arranged in the direction of travel, wherein preferably the force detectors (11) of neighbouring measuring fields (4) lying in different rows (2, 3) are electrically connected in series.

10. The device according to any one of claims 1 to 9, **characterised in that** at least one row (2, 3), more particularly two rows, of measuring fields (4) are arranged in a carrier plate.

11. The device according to at least one of claims 1 to 10, **characterised in that** at the upper shank (12) terminates flush with a surface of the carrier plate.

12. The device according to any one of claims 1 to 11, **characterised in that** the carrier plate and the upper shanks (12) of the measuring fields are covered by a soft rubbery elastic layer (19) which terminates flush with the road surfacing.

13. The device according to any one of claims 1 to 12, **characterised in that** at least one, in particular all, force recorders (10) is/are strain gauges.

14. The device according to any one of claims 1 to 13, **characterised in that** a vehicle recognition system (6) and/or a toll and/or counting system (6a) is connected to the data processing system (7).

## Revendications

1. Dispositif destiné à déterminer des charges par roue et/ou des charges par essieu pour des véhicules routiers circulant sur des routes avec revêtement routier (17), avec un trajet de mesure (1) composé de plusieurs champs de mesure (4) dont chacun est muni d'au moins un détecteur de force (10), lequel est placé dans un corps creux (11) assurant sa protection mécanique, les détecteurs de force (10) étant connectés à un système de traitement des données (7) et le cas échéant, des détecteurs (5) supplémentaires état prévus pour des roues et/ou des essieux et/ou des véhicules dans la zone à l'avant et à l'arrière du trajet de mesure (1), le corps creux (11) étant formé par deux branches (12, 16) assemblées de manière élastique l'une contre l'autre, le long de leurs arêtes longitudinales, avec lesquelles le ou les détecteurs de force (10) sont reliés, **caractérisé en ce que** les branches (12) sont soit assemblées par complémentarité de force, par l'intermédiaire d'une barrette (13) longitudinale individuelle ou les branches (16) sont assemblées sur une extrémité et forment un corps creux (11) angulaire.

2. Dispositif selon la revendication 1, **caractérisé en ce que** les branches (12, 16) sont constituées d'un métal léger.

3. Dispositif selon la revendication 1, **caractérisé en ce que** le corps creux (11) est constitué d'une matière plastique renforcée par fibres.

4. Dispositif selon la revendication 1, 2 ou 3, **caractérisé en ce que** les branches (12, 16) sont conçues à matière affleurée, notamment en monobloc.

5. Dispositif selon l'une quelconque des revendications 1 à 4, **caractérisé en ce que** les branches (12) sont conçues à matière affleurée, notamment en monobloc avec la barrette (13).

6. Dispositif selon l'une quelconque des revendications 1 à 5, **caractérisé en ce que** la branche supérieure (12) porte un revêtement routier (19).

7. Dispositif selon l'une quelconque des revendications 1 à 5, **caractérisé en ce que** la branche supérieure (12) se termine à fleur du revêtement routier (17).

8. Dispositif selon l'une quelconque des revendications 1 à 7, **caractérisé en ce que** pour former le trajet de mesure, vus dans le sens de déplacement, les champs de mesure (4) formés par les profilés creux (11) munis des détecteurs de force (10) sont placés à au moins deux écarts (d₁, d₂) différents, les uns des autres, notamment en alternance.

9. Dispositif selon l'une quelconque des revendications 1 à 8, **caractérisé en ce que** chaque trajet de mesure (1) comporte au moins deux rangées (2, 3) de champs de mesure (4) placées dans le sens de déplacement, de préférence, les détecteurs de force (11) de champs de mesure (4) voisins qui se situent dans des rangées (2, 3) différentes étant électriquement montés en série.

10. Dispositif selon l'une quelconque des revendications 1 à 9, **caractérisé en ce qu'**au moins une rangée (2, 3), notamment deux rangées de champs de mesure (4) étant placés dans une plaque de support.

11. Dispositif selon l'une quelconque des revendications 1 à 10, **caractérisé en ce que** la branche (12) supérieure se termine à fleur d'une surface de la plaque de support.

12. Dispositif selon l'une quelconque des revendications 1 à 11, **caractérisé en ce que** la plaque de support et les branches supérieures (12) des champs de mesure sont recouvertes d'une couche (19) caoutchouteuse élastique souple qui se termine à fleur du revêtement routier.

13. Dispositif selon l'une quelconque des revendications 1 à 12, **caractérisé en ce qu'**au moins un, notamment tous les capteurs de force (10) sont des jauges de contrainte.

14. Dispositif selon l'une quelconque des revendications 1 à 13, **caractérisé en ce qu'**un système d'identification (6) de véhicules et/ou un système de péage et/ou un système de comptage (6a) est connecté avec le système de traitement de données (7).
